(19) Europäisches Patentamt
European Patent Office
Office européen des brevets

(11) EP 4 036 146 B1

(12) **EUROPEAN PATENT SPECIFICATION**

(45) Date of publication and mention of the grant of the patent:
**25.09.2024 Bulletin 2024/39**

(21) Application number: **20868795.4**

(22) Date of filing: **01.09.2020**

(51) International Patent Classification (IPC):
***C08G 64/18*** *(2006.01)*

(52) Cooperative Patent Classification (CPC):
**C08G 64/183; C08G 64/305; C08G 64/307**

(86) International application number:
**PCT/JP2020/033013**

(87) International publication number:
**WO 2021/059884 (01.04.2021 Gazette 2021/13)**

(54) **POLYCARBONATE RESIN**

POLYCARBONATHARZ

RÉSINE DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2019 JP 2019173685**

(43) Date of publication of application:
**03.08.2022 Bulletin 2022/31**

(73) Proprietor: **MITSUBISHI GAS CHEMICAL COMPANY, INC.**
**Chiyoda-ku**
**Tokyo 100-8324 (JP)**

(72) Inventors:
- **TSUJIMURA, Tomoya**
  **Tokyo 125-8601 (JP)**
- **SHIMOKAWA, Keisuke**
  **Tokyo 125-8601 (JP)**
- **ISOBE, Takehiko**
  **Tokyo 125-8601 (JP)**
- **HARADA, Hidefumi**
  **Tokyo 125-8601 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| **JP-A- H 048 724** | **JP-A- H 048 724** |
| **JP-A- H07 149 888** | **JP-A- S54 127 455** |
| **US-A- 4 252 922** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present invention relates to a novel polycarbonate resin.

BACKGROUND ART

It is known that polyethylene glycol, poly(2-methyl) ethylene glycol or the like is blended in a thermoplastic resin such as a polycarbonate resin. Patent Document 1 describes a γ-ray irradiation-resistant polycarbonate resin containing this, and Patent Document 2 describes a thermoplastic resin composition having excellent antistatic properties and surface appearance that is blended in PMMA, etc.

Further, Patent Document 3 proposes to improve the transmittance and color phase by blending a polyalkylene glycol composed of a linear alkyl group. By blending a polytetramethylene ether glycol, the transmittance and the degree of yellowness (yellow index: YI) are improved.

Moreover, Patent Document 4 describes a method for producing a polycarbonate copolymer, wherein a diol obtained by diesterification of polyalkylene glycol is used as a raw material (comonomer). However, in this polycarbonate copolymer, a diester diol of polyalkylene glycol is unstable, and for this reason, impact resistance is insufficient and the color phase and heat discoloration resistance are unsatisfactory.

For molding optical components, high barrel temperatures and high-speed injection are required. With this, there is a problem that the amount of gas generated at the time of molding increases and mold contamination tends to progress. For this reason, resins to be used for molding optical components are required not only to have excellent optical properties, but also to cause less mold contamination due to the generation of gas at the time of injection molding at high temperatures and to have excellent impact resistance.

PRIOR ART DOCUMENTS

PATENT DOCUMENTS

Patent Document 1: Japanese Laid-Open Patent Publication No. H01-22959

Patent Document 2: Japanese Laid-Open Patent Publication No. H09-227785

Patent Document 3: Japanese Patent No. 5699188

Patent Document 4: Japanese Laid-Open Patent Publication No. 2006-016497

Patent Document: US4252922A discloses a polyether carbonate obtained from reaction of a polyethylene oxide glycol with bisphenol A and phosgene.

SUMMARY OF THE INVENTION

PROBLEMS TO BE SOLVED BY THE INVENTION

The present invention was made in consideration of the above-described actual circumstances, and the purpose thereof is to provide a polycarbonate resin, wherein the amount of gas generated is small.

MEANS FOR SOLVING THE PROBLEMS

The present inventor diligently made researches in order to solve the above-described problem and found that the generation of gas at the time of molding can be suppressed by a specific polycarbonate resin, and thus the present invention was achieved.

Specifically, the present invention relates to a polycarbonate resin described below.

<1> A polycarbonate resin comprising a structural unit (A) represented by general formula (1) and a structural unit (B) represented by general formula (4):

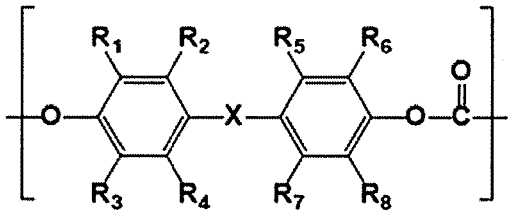

(1)

wherein in general formula (1):

$R_1$, $R_2$, $R_3$, $R_4$, $R_5$, $R_6$, $R_7$ and $R_8$ are each independently selected from the group consisting of a hydrogen atom, a fluorine atom, a chlorine atom, a bromine atom, an iodine atom, an alkyl group having 1 to 7 carbon atoms, an aryl group having 6 to 12 carbon atoms, an alkenyl group having 2 to 7 carbon atoms, an alkoxy group having 1 to 7 carbon atoms and an aralkyl group having 7 to 17 carbon atoms, and each of the alkyl group, the aryl group, the alkenyl group, the alkoxy group and the aralkyl group may have a substituent; and

X represents -O-, -S-, -SO-, $-SO_2-$, -CO-, a cycloalkylene group having 6 to 12 carbon atoms, or a divalent group represented by general formula (2) or general formula (3), and the cycloalkylene group may be substituted with 1 to 12 alkyl groups having 1 to 3 carbon atoms:

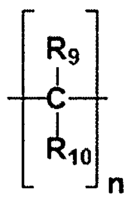

(2)

wherein in general formula (2):

$R_9$ and $R_{10}$ are each independently selected from the group consisting of a hydrogen atom, a fluorine atom, a chlorine atom, a bromine atom, an iodine atom, an alkyl group having 1 to 20 carbon atoms, an alkoxy group having 1 to 5 carbon atoms, an aryl group having 6 to 12 carbon atoms, an aralkyl group having 7 to 17 carbon atoms and an alkenyl group having 2 to 15 carbon atoms;

each of the alkyl group, the alkoxy group, the aryl group, the aralkyl group and the alkenyl group of $R_9$ and $R_{10}$ may have a substituent;

$R_9$ and $R_{10}$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent; and

n represents an integer of 0 to 20,

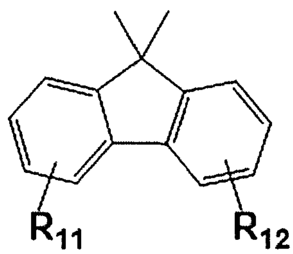

(3)

wherein in general formula (3):

$R_{11}$ and $R_{12}$ are each independently selected from the group consisting of a hydrogen atom, a fluorine atom, a chlorine atom, a bromine atom, an iodine atom, an alkyl group having 1 to 20 carbon atoms, an alkoxy group having 1 to 7 carbon atoms, an aryl group having 6 to 12 carbon atoms, an aralkyl group having 7 to 17 carbon atoms and an alkenyl group having 2 to 15 carbon atoms, and each of the alkyl group, the alkoxy group, the aryl group, the aralkyl group and the alkenyl group may have a substituent; and

$R_{11}$ and $R_{12}$ may be bonded to each other so as to form a carbocyclic ring having 3 to 20 carbon atoms or a heterocyclic ring having 1 to 20 carbon atoms, and each of the carbocyclic ring and the heterocyclic ring

may have a substituent,

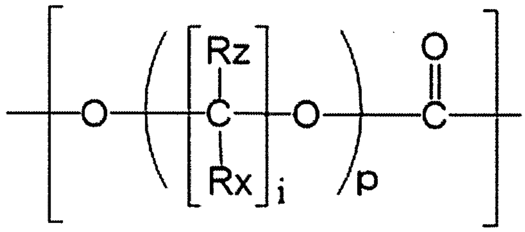 (4)

wherein in general formula (4): $R_z$ and $R_x$ each independently represent a hydrogen atom or an alkyl group having 1 to 3 carbon atoms; i represents an integer of 3 to 10; and p represents an integer of 5 to 600.

<2> The polycarbonate resin according to item <1>, wherein the mass ratio between the structural unit (A) and the structural unit (B) (A/B) is 1/99 to 50/50.

<3> A polycarbonate resin comprising only a structural unit (B) represented by general formula (4):

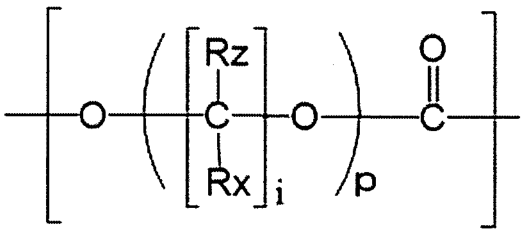 (4)

wherein: $R_z$ and $R_x$ each independently represent a hydrogen atom or an alkyl group having 1 to 3 carbon atoms; i represents an integer of 3 to 10; and p represents an integer of 5 to 600.

<4> The polycarbonate resin according to any one of items <1> to <3>, wherein the concentration of a terminal hydroxyl group in the polycarbonate resin is 1 ppm to 3000 ppm.

<5> The polycarbonate resin according to any one of items <1> to <4>, wherein i in general formula (4) is an integer of 3 or 4.

<6> The polycarbonate resin according to any one of items <1> to <5>, wherein the polystyrene-equivalent weight average molecular weight (Mw) of the polycarbonate resin is 1,000 to 60,000.

<7> The polycarbonate resin according to any one of items <1> to <6>, wherein the glass transition temperature (Tg) of the polycarbonate resin is -100 to 140°C.

ADVANTAGEOUS EFFECT OF THE INVENTION

When using the polycarbonate resin of the present invention, the amount of gas generated is small, and the polycarbonate resin has the effect of widening the range of resin design according to various applications.

EMBODIMENTS FOR CARRYING OUT THE INVENTION

Hereinafter, the present invention will be described in detail by way of embodiments, examples, etc.

In this specification, "-" is used to mean that numerical values described at the both sides of "-" are included as the lower limit and the upper limit, unless otherwise specified.

The first embodiment of the present invention is a polycarbonate resin containing a structural unit (A) represented by general formula (1) and a structural unit (B) represented by general formula (4).

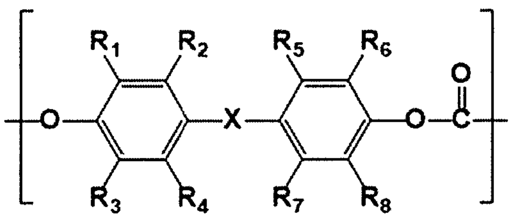 (1)

In general formula (1), $R_1$, $R_2$, $R_3$, $R_4$, $R_5$, $R_6$, $R_7$ and $R_8$ are each independently selected from the group consisting of a hydrogen atom, a fluorine atom, a chlorine atom, a bromine atom, an iodine atom, an alkyl group having 1 to 7 carbon atoms (preferably 1 to 3 carbon atoms), an aryl group having 6 to 12 carbon atoms (preferably 6 to 10 carbon atoms), an alkenyl group having 2 to 7 carbon atoms (preferably 2 to 5 carbon atoms), an alkoxy group having 1 to 7 carbon atoms (preferably 1 to 4 carbon atoms) and an aralkyl group having 7 to 17 carbon atoms (preferably 7 to 11 carbon atoms), and are preferably selected from the group consisting of a hydrogen atom, a phenyl group and a methyl group. More preferably, all of $R_1$ to $R_8$ represent a hydrogen atom, or alternatively, $R_1$ or $R_3$, and $R_6$ or $R_8$ represent a phenyl group and the others represent a hydrogen atom.

Note that each of the alkyl group, the aryl group, the alkenyl group, the alkoxy group and the aralkyl group may have a substituent, and preferred examples of the substituent include a phenyl group.

In general formula (1), X represents -O-, -S-, -SO-, $-SO_2-$, -CO-, a cycloalkylene group having 6 to 12 carbon atoms, or a divalent group represented by general formula (2) or general formula (3), and the cycloalkylene group may be substituted with 1 to 12 alkyl groups having 1 to 3 carbon atoms. Preferably, X represents a divalent group represented by general formula (2) or a divalent group represented by general formula (3).

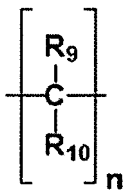

(2)

In general formula (2), $R_9$ and $R_{10}$ are each independently selected from the group consisting of a hydrogen atom, a fluorine atom, a chlorine atom, a bromine atom, an iodine atom, an alkyl group having 1 to 20 carbon atoms (preferably 1 to 5 carbon atoms), an alkoxy group having 1 to 5 carbon atoms (preferably 1 to 3 carbon atoms), an aryl group having 6 to 12 carbon atoms (preferably 6 to 8 carbon atoms), an aralkyl group having 7 to 17 carbon atoms (preferably 7 to 10 carbon atoms) and an alkenyl group having 2 to 15 carbon atoms (preferably 2 to 10 carbon atoms), and are preferably selected from the group consisting of a hydrogen atom, a methyl group, an ethyl group, an isopropyl group, an isobutyl group and a phenyl group. More preferably, both $R_9$ and $R_{10}$ represent a methyl group.

Each of the alkyl group, the alkoxy group, the aryl group, the aralkyl group and the alkenyl group of $R_9$ and $R_{10}$ may have a substituent.

$R_9$ and $R_{10}$ may be bonded to each other so as to form a carbocyclic ring having 3 to 20 carbon atoms (preferably 5 to 15 carbon atoms) or a heterocyclic ring having 1 to 20 carbon atoms (preferably 5 to 10 carbon atoms), and each of the carbocyclic ring and the heterocyclic ring may have a substituent. Preferred examples of the substituent include a cyclohexyl group, an adamantyl group, a cyclododecane group and a norbornane group.

In general formula (2), n represents an integer of 0 to 20, preferably an integer of 0 to 5, and more preferably an integer of 0 to 2.

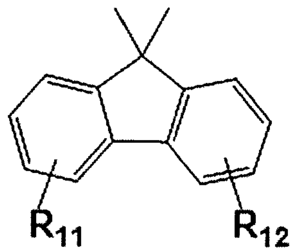

(3)

In general formula (3), $R_{11}$ and $R_{12}$ are each independently selected from the group consisting of a hydrogen atom, a fluorine atom, a chlorine atom, a bromine atom, an iodine atom, an alkyl group having 1 to 20 carbon atoms (preferably 1 to 3 carbon atoms), an alkoxy group having 1 to 7 carbon atoms (preferably 1 to 3 carbon atoms), an aryl group having 6 to 12 carbon atoms (preferably 6 to 10 carbon atoms), an aralkyl group having 7 to 17 carbon atoms (preferably 7 to 11 carbon atoms) and an alkenyl group having 2 to 15 carbon atoms, and are preferably selected from the group consisting of a hydrogen atom and a phenyl group. More preferably, both $R_{11}$ and $R_{12}$ represent a hydrogen atom.

Note that each of the alkyl group, the alkoxy group, the aryl group, the aralkyl group and the alkenyl group may have a substituent, and preferred examples of the substituent include a phenyl group.

$R_{11}$ and $R_{12}$ may be bonded to each other so as to form a carbocyclic ring having 3 to 20 carbon atoms

(preferably 3 to 10 carbon atoms) or a heterocyclic ring having 1 to 20 carbon atoms (preferably 1 to 10 carbon atoms), and each of the carbocyclic ring and the heterocyclic ring may have a substituent.

Preferred examples of a monomer constituting the structural unit (B) represented by general formula (4) include poly-n-propylene glycol and polytetramethylene ether glycol, and poly-n-propylene glycol is more preferred.

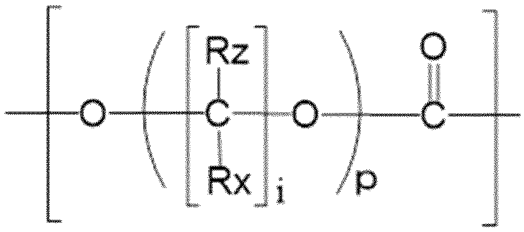 (4)

In general formula (4), $R_z$ and $R_x$ each independently represent a hydrogen atom or an alkyl group having 1 to 3 carbon atoms, and preferably represent a hydrogen atom, a methyl group or an ethyl group. More preferably, both $R_z$ and $R_x$ represent a hydrogen atom.

In general formula (4), i represents an integer of 3 to 10, preferably an integer of 3 to 6, and more preferably 3 or 4.

In general formula (4), p represents an integer of 5 to 600, preferably an integer of 5 to 550, and more preferably an integer of 5 to 500.

Preferred examples of a monomer constituting the structural unit (A) represented by general formula (1) include bisphenol A, bisphenol S, 4,4'-oxydiphenol, 4,4'-biphenol and 4,4'-thiodiphenol, and bisphenol A and bisphenol S are more preferred. In particular, when employing bisphenol A, a polycarbonate resin having a small YI value and excellent heat resistance is obtained, and it is preferred from the viewpoint of marketability. Bisphenol S is also preferred from the viewpoint of heat resistance.

In the polycarbonate resin of the present invention, the mass ratio between the structural unit (A) and the structural unit (B) (A/B) is preferably 1/99 to 50/50, more preferably 5/95 to 50/50, even more preferably 5/95 to 40/60, still more preferably 5/95 to 35/65, and particularly preferably 10/90 to 30/70.

The polycarbonate resin of the present invention is preferably a polycarbonate resin which includes a carbonate bond derived from bisphenol A and a carbonate bond derived from poly-n-propylene glycol that may have a substituent.

Regarding the mass ratio between bisphenol A and poly-n-propylene glycol that constitute the polycarbonate resin based on the total (100% by mass) thereof, it is preferred that bisphenol A is 5-50% by mass and poly-n-propylene glycol is 50-95% by mass, it is more preferred that bisphenol A is 5-40% by mass and poly-n-propylene glycol is 60-95% by mass, and it is even more preferred that bisphenol A is 5-35% by mass and poly-n-propylene glycol is 65-95% by mass. When the amount of poly-n-propylene glycol is less than 50% by mass, the color phase of the polycarbonate resin is deteriorated, and when it is more than 95% by mass, a white turbidity tends to be yielded.

The polycarbonate resin of the present invention is preferably represented by general formula (5) below, and specifically, it is preferably a polycarbonate resin composed of a polycarbonate unit derived from bisphenol A and a polycarbonate unit derived from poly-n-propylene glycol.

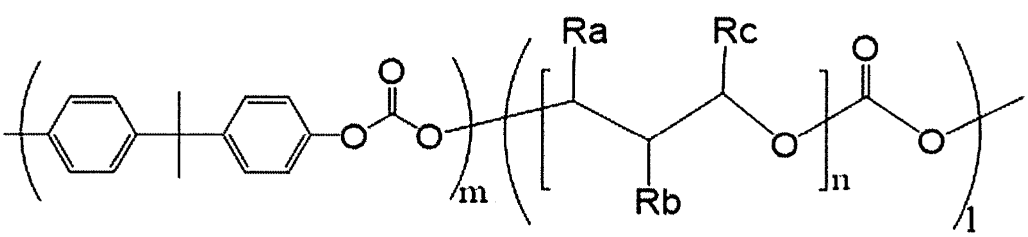 (5)

In general formula (5), $R_a$, $R_b$ and $R_c$ each independently represent a hydrogen atom or an alkyl group having 1 to 3 carbon atoms, and more preferably represent a hydrogen atom, a methyl group or an ethyl group, m represents an integer of 1 to 3000, and more preferably an integer of 1 to 2500. n represents an integer of 5 to 600, and more preferably an integer of 5 to 550. 1 represents an integer of 1 to 3000, and more preferably an integer of 1 to 2500.

The polycarbonate resin of the present invention can be produced by a commonly-used production method such as an interfacial polymerization method and a melt polymerization method, and for example, it can be produced by a method of reacting at least bisphenol A, poly-n-propylene glycol and a carbonate precursor such as phosgene and diphenyl carbonate.

As the poly-n-propylene glycol that may have a substituent, various types of poly-n-propylene glycols can be

used, and preferred examples thereof include a poly-n-propylene glycol represented by general formula (6) below, wherein a methylene group may have a substituent.

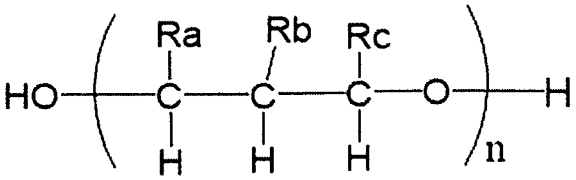

(6)

In general formula (6), $R_a$, $R_b$ and $R_c$ each independently represent a hydrogen atom or an alkyl group having 1 to 3 carbon atoms, and more preferably represent a hydrogen atom, a methyl group or an ethyl group, n represents an integer of 6 to 600, and more preferably an integer of 6 to 550.

As the poly-n-propylene glycol, (2-methyl)-n-propylene glycol (in general formula (6), $R_b$ is a methyl group), (2-ethyl)-n-propylene glycol (in general formula (6), $R_b$ is an ethyl group) and n-propylene glycol (all of $R_a$, $R_b$ and $R_c$ are a hydrogen atom) are more preferred, and among them, n-propylene glycol (all of $R_a$, $R_b$ and $R_c$ are a hydrogen atom) (i.e., trimethylene glycol) is even more preferred.

The poly-n-propylene glycol represented by general formula (6) may be a homopolymer composed of one type of $R_a$, $R_b$ and $R_c$ or a copolymer composed of different $R_a$s, $R_b$s and $R_c$s.

Examples of commercially-available products of the poly-n-propylene glycol represented by general formula (6) include "VELVETOL" (trade name) manufactured by Allessa, which is a commercially-available product of a poly-n-propylene glycol, wherein all of $R_a$, $R_b$ and $R_c$ in general formula (6) are a hydrogen atom, i.e., polytrimethylene glycol.

The poly-n-propylene glycol represented by general formula (6) may be a copolymer with a linear polyalkylene glycol such as polyethylene glycol, polytetramethylene glycol, polypentamethylene glycol and polyhexamethylene glycol, but preferred is a homopolymer composed of polytrimethylene glycol because transparency of molded products obtained is improved in this case.

The poly-n-propylene glycol may contain a polyalkylene glycol copolymer, which has, in addition to an n-propylene ether unit (P1) represented by general formula (7) below, a branched alkylene ether unit (P2) selected from among units represented by general formulae (8-1) to (8-4) below.

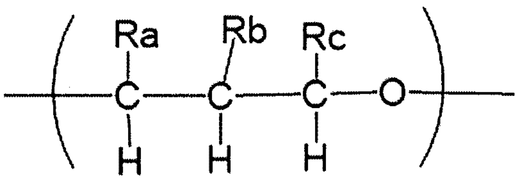

(7)

In general formula (7), $R_a$, $R_b$ and $R_c$ are the same as those in general formula (6).

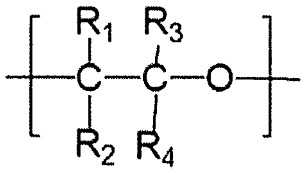

(8-1)

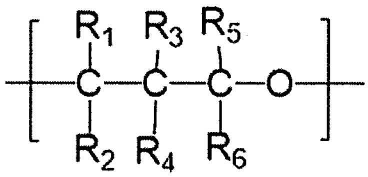

(8-2)

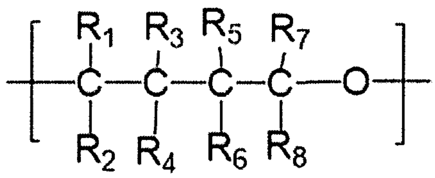 (8-3)

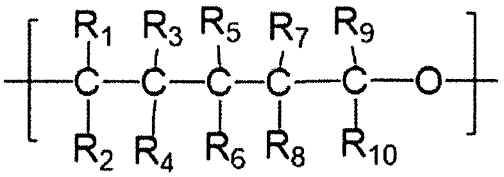 (8-4)

In general formulae (8-1) to (8-4), $R^1$ to $R^{10}$ each independently represent a hydrogen atom or an alkyl group having 1 to 3 carbon atoms, and in each of general formulae (8-1) to (8-4), at least one of $R^1$ to $R^{10}$ represents an alkyl group having 1 to 3 carbon atoms.

Regarding branched alkylene ether units represented by general formulae (8-1) to (8-4), either a homopolymer composed of a branched alkylene ether unit having any one of structures of general formulae (8-1) to (8-4) or a copolymer composed of a branched alkylene ether unit having a plurality of structures may be employed.

Regarding the n-propylene ether unit represented by general formula (7), when it is described as a glycol, it is an n-propylene glycol, and in addition to the n-propylene glycol, at least one of ethylene glycol, tetramethylene glycol, pentamethylene glycol, hexamethylene glycol, etc. may be mixed, but the n-propylene glycol alone is preferred. More preferred is the n-propylene glycol, wherein all of $R_a$, $R_b$ and $R_c$ are a hydrogen atom (i.e., trimethylene glycol) alone.

Trimethylene glycol is industrially produced by a method in which ethylene oxide is hydroformylated to obtain 3-hydroxypropionaldehyde, which is then hydrogenated, or a method in which acrolein is hydrated to obtain 3-hydroxypropionaldehyde, which is then hydrogenated with an Ni catalyst. Recently, a bio method is also employed, and according to this, glycerin, glucose, starch or the like is reduced using microorganisms to produce trimethylene glycol.

Regarding the branched alkylene ether unit represented by general formula (8-1) above, when it is described as a glycol, examples thereof include (2-methyl) ethylene glycol, (2-ethyl) ethylene glycol and (2,2-dimethyl) ethylene glycol, and these substances may be mixed. Preferred are (2-methyl) ethylene glycol and (2-ethyl) ethylene glycol.

Regarding the branched alkylene ether unit represented by general formula (8-2) above, when it is described as a glycol, examples thereof include (2-methyl) trimethylene glycol, (3-methyl) trimethylene glycol, (2-ethyl) trimethylene glycol, (3-ethyl) triethylene glycol, (2,2-dimethyl) trimethylene glycol, (2,2-methylethyl) trimethylene glycol, (2,2-diethyl) trimethylene glycol (i.e., neopentyl glycol), (3,3-dimethyl) trimethylene glycol, (3,3-methylethyl) trimethylene glycol and (3,3-diethyl) trimethylene glycol, and these substances may be mixed.

Regarding the branched alkylene ether unit represented by general formula (8-3) above, when it is described as a glycol, examples thereof include (3-methyl) tetramethylene glycol, (4-methyl) tetramethylene glycol, (3-ethyl) tetramethylene glycol, (4-ethyl) tetramethylene glycol, (3,3-dimethyl) tetramethylene glycol, (3,3-methylethyl) tetramethylene glycol, (3,3-diethyl) tetramethylene glycol, (4,4-dimethyl) tetramethylene glycol, (4,4-methylethyl) tetramethylene glycol and (4,4-diethyl) tetramethylene glycol, and these substances may be mixed. Preferred is (3-methyl) tetramethylene glycol.

Regarding the branched alkylene ether unit represented by general formula (8-4) above, when it is described as a glycol, examples thereof include (3-methyl) pentamethylene glycol, (4-methyl) pentamethylene glycol, (5-methyl) pentamethylene glycol, (3-ethyl) pentamethylene glycol, (4-ethyl) pentamethylene glycol, (5-ethyl) pentamethylene glycol, (3,3-dimethyl) pentamethylene glycol, (3,3-methylethyl) pentamethylene glycol, (3,3-diethyl) pentamethylene glycol, (4,4-dimethyl) pentamethylene glycol, (4,4-methylethyl) pentamethylene glycol, (4,4-diethyl) pentamethylene glycol, (5,5-dimethyl) pentamethylene glycol, (5,5-methylethyl) pentamethylene glycol and (5,5-diethyl) pentamethylene glycol, and these substances may be mixed.

Thus, regarding the units represented by general formulae (8-1) to (8-4) constituting the branched alkylene ether units, glycols are described as examples for the sake of convenience, but the units are not limited to these glycols, and alkylene oxides thereof and polyether-forming derivatives thereof may also be employed.

Regarding preferred examples of a poly-n-propylene glycol copolymer, a copolymer composed of the n-propylene ether unit and the unit represented by general formula (8-2) is preferred, and in particular, a copolymer composed of a trimethylene ether unit and a 3-methyltrimethylene ether unit is more preferred.

The poly-n-propylene glycol copolymer may be a random copolymer or a block copolymer.

In the poly-n-propylene glycol copolymer, the copolymerization ratio between the n-propylene ether unit (P1) represented by general formula (7) and the branched alkylene ether units (P2) represented by general formulae (8-1)

to (8-4) ((P1)/(P2), molar ratio) is preferably 95/5 to 5/95, more preferably 93/7 to 40/60, and even more preferably 90/10 to 65/35, and it is more preferably rich with the n-propylene ether unit (P1).

Note that the molar fraction is measured using a $^1$H-NMR measurement apparatus and deuterated chloroform as a solvent.

Among the above-described examples, a particularly preferred poly-n-propylene glycol is a homopolymer of an n-propylene glycol not having a substituent, i.e., trimethylene glycol.

In the structure of the poly-n-propylene glycol, a structure derived from a polyol such as 1,4-butanediol, glycerol, sorbitol, benzenediol, bisphenol A, cyclohexanediol and spiroglycol may be included. By adding these polyols at the time of the polymerization of polyalkylene glycol, organic groups thereof can be imparted to the main chain. Particularly preferred examples thereof include glycerol, sorbitol and bisphenol A.

Preferred examples of the poly-n-propylene glycol containing an organic group in its structure include:

poly-n-propylene glycol glyceryl ether,
poly(2-methyl)-n-propylene glycol glyceryl ether,
poly-n-propylene glycol glyceryl ether,
poly-n-propylene glycol-poly(2-methyl)-n-propylene glycol glyceryl ether,
poly-n-propylene glycol-poly(2-ethyl) poly-n-propylene glycol glyceryl ether,
poly-n-propylene glycol sorbityl ether,
poly(2-methyl)-n-propylene glycol sorbityl ether,
poly-n-propylene glycol sorbityl ether,
poly-n-propylene glycol-poly(2-methyl) ethylene glycol sorbityl ether,
bisphenol A-bis(poly-n-propylene glycol) ether,
bisphenol A-bis(poly(2-methyl)-n-propylene glycol) ether,
bisphenol A-bis(poly-n-propylene glycol-poly(2-methyl) ethylene glycol) ether and
bisphenol A-bis(poly-n-propylene glycol-poly(2-ethyl) poly-n-propylene glycol) ether.

The weight average molecular weight (Mw) of the poly-n-propylene glycol is preferably 600-8,000, and it is more preferably 800 or more, and even more preferably 1,000 or more, and it is more preferably 6,000 or less, even more preferably 5,000 or less, and particularly preferably 4,000 or less. When the weight average molecular weight is more than the above-described upper limit, compatibility tends to be reduced. When the weight average molecular weight is lower than the above-described lower limit, impact resistance of the polycarbonate resin may be reduced.

Note that the weight average molecular weight (Mw) is a polystyrene equivalent molecular weight measured using gel permeation chromatography (GPC) with THF as a developing solvent.

Specifically, it is a value obtained as a polystyrene equivalent molecular weight (weight average molecular weight) using a high-speed GPC apparatus "HLC-8320" manufactured by Tosoh Corporation as GPC, columns: HZ-M (4.6 mm×150 mm)×3 manufactured by Tosoh Corporation (connected in series), and an eluant: chloroform.

Among monomers as raw materials of the polycarbonate resin, examples of the carbonate precursor to be used include a carbonyl halide and a carbonate ester. As the carbonate precursor, one material may be used solely, or two or more types of materials may be used in any combination at any ratio.

Specific examples of the carbonyl halide include phosgene; and a haloformate such as a bischloroformate form of a dihydroxy compound and a monochloroformate form of a dihydroxy compound.

Specific examples of the carbonate ester include diaryl carbonates such as diphenyl carbonate and ditolyl carbonate; dialkyl carbonates such as dimethyl carbonate and diethyl carbonate; and a carbonate form of a dihydroxy compound such as a biscarbonate form of a dihydroxy compound, a monocarbonate form of a dihydroxy compound and a cyclic carbonate.

As the polycarbonate resin of the present invention, a bisphenol A-poly-n-propylene glycol copolymerized polycarbonate represented by general formula (9) below is particularly preferred.

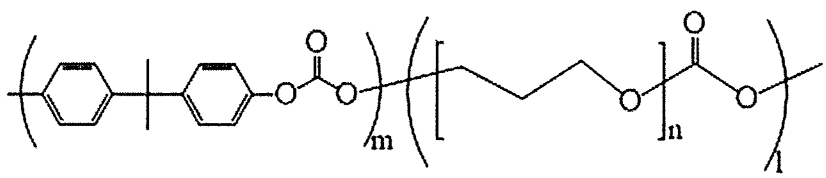
(9)

In general formula (9), m, n and 1 are the same as those in general formula (5).

The second embodiment of the present invention is a polycarbonate resin containing only a structural unit (B) represented by general formula (4):

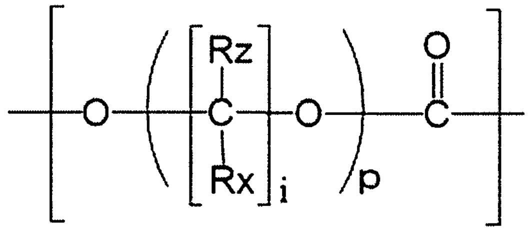

(4)

In general formula (4), $R_Z$, $R_X$, i and p are the same as those in the above-described first embodiment.

The method for producing the polycarbonate resin of the present invention is not particularly limited, and any publicly-known method can be employed. Examples of the method include an interfacial polymerization method, a melt transesterification method, a pyridine method, a ring-opening polymerization method for a cyclic carbonate compound and a solid phase transesterification method for a prepolymer. Among them, a melt transesterification method and an interfacial polymerization method are preferred, and more preferred is a melt transesterification method.

The polystyrene-equivalent weight average molecular weight (Mw) of the polycarbonate resin of the present invention is preferably 1,000-60,000, and more preferably 5,000-40,000. The lower limit is even more preferably 6,000 or more, and particularly preferably 7,000 or more, and the upper limit is even more preferably 37,000 or less, and particularly preferably 35,000 or less. When the weight average molecular weight (Mw) is more than the above-described upper limit, compatibility tends to be reduced. When the weight average molecular weight is lower than the above-described lower limit, a gas tends to be generated at the time of molding.

The weight average molecular weight (Mw) of the polycarbonate resin of the present invention can be adjusted by selection of Mw of a polyalkylene glycol that is one of raw materials of a comonomer diol, adjustment of the ratio of the carbonate precursor, addition of a terminator, adjustment of the temperature or pressure at the time of polymerization, or the like. For example, in the melt transesterification method, Mw can be increased by adjusting the monomer raw material ratio so that the reaction ratio between diphenyl carbonate that is a carbonate precursor monomer and a diol monomer becomes close to 1, keeping a high polymerization temperature so that a by-product phenol can be easily removed from the polymerization system, reducing the pressure as low as possible, actively carrying out interface renewal by means of stirring, etc.

Note that the weight average molecular weight (Mw) of the polycarbonate resin of the present invention is a polystyrene equivalent molecular weight measured using GPC with chloroform as a developing solvent.

Specifically, it is a value obtained as a polystyrene equivalent molecular weight (weight average molecular weight) using a high-speed GPC apparatus "HLC-8320" manufactured by Tosoh Corporation as GPC, columns: HZ-M (4.6 mm×150 mm)×3 manufactured by Tosoh Corporation (connected in series), and an eluant: chloroform, at a measurement temperature: 25°C.

The concentration of a terminal hydroxyl group in the polycarbonate resin of the present invention is preferably 1 ppm to 3000 ppm from the viewpoint of maintaining hydrolysis resistance, and it is more preferably 1-1000 ppm, and particularly preferably 1-500 ppm. In the present invention, as the method for measuring the concentration of the terminal hydroxyl group, the method described in the Examples below can be used.

The glass transition temperature (Tg) of the polycarbonate resin of the present invention is preferably -100 to 140°C from the viewpoint of ease of handling, and it is more preferably -70 to 120°C, and particularly preferably -70 to 110°C. In the present invention, as the method for measuring the glass transition temperature, the method described in the Examples below can be used.

[Additives, etc.]

The polycarbonate resin of the present invention may contain additives other than those described above, for example, an antioxidant, a mold release agent, an ultraviolet absorber, a fluorescent brightener, a pigment, a dye, another polymer other than the polycarbonate resin, a flame retardant, an impact resistance improver, an antistatic agent, a plasticizer, a compatibilizer, etc. These additives may be blended solely, or two or more of them may be blended.

## EXAMPLES

Hereinafter, the present invention will be described in more detail by way of examples. However, the present invention is not limited to the below-described examples.

<Method for measuring concentration (ppm) of terminal hydroxyl group>

It was obtained by dissolving 0.05 g of a resin sample in 1 ml of deuterated chloroform (containing 0.05 w/v% TMS) and carrying out the $^1$H-NMR measurement at 23°C. Specifically, the concentration of the terminal hydroxyl group (OH concentration) was calculated from the integration ratio between a peak related to the hydroxyl group and other peaks included in the resin skeleton.
Apparatus: 500 MHz nuclear magnetic resonance apparatus AVANCE III HD manufactured by BRUKER

<Method for measuring weight average molecular weight (Mw)>

Using GPC with chloroform as a developing solvent, a calibration curve was produced using a standard polystyrene having an already-known molecular weight (molecular weight distribution=1) ("PStQuick MP-M" manufactured by Tosoh Corporation). The elution time and molecular weight value of each peak were plotted based on the measured standard polystyrene, and three-dimensional approximation was conducted to obtain a calibration curve. The weight average molecular weight (Mw) and the number average molecular weight (Mn) were obtained as polystyrene equivalent values using the below-described calculation formula.

[Calculation formula]

$$Mw=\Sigma(Wi\times Mi)\div\Sigma(Wi)$$

In this regard, "i" represents the "i"th dividing point when dividing the molecular weight M, "Wi" represents the "i"th weight, and "Mi" represents the "i"th molecular weight. The molecular weight M represents the value of the molecular weight of polystyrene at the corresponding elution time in the calibration curve.

[Measurement conditions]

Apparatus: HLC-8320GPC manufactured by Tosoh Corporation
Columns:

Guard column: TSKguardcolumn SuperMPHZ-M × 1
Analysis column: TSKgel SuperMultiporeHZ-M × 3

Solvent: HPLC grade chloroform
Injection amount: 10 μL
Sample concentration: 0.2 w/v% HPLC grade chloroform solution
Flow rate of solvent: 0.35 ml/min
Measurement temperature: 40°C
Detector: RI

<Measurement of amount of gas generated>

The measurement was carried out using an apparatus for simultaneous thermogravimetry/differential thermal analysis (TG/TDA) (product name "TGDTA7300" manufactured by Hitachi High-Tech Science Corporation).
5 mg of a sample was precisely weighed in a platinum pan (Pt open type sample container, cylindrical container having a diameter of 5.2 mm and a height of 5.0 mm) to prepare a measurement sample.
The measurement was carried out under nitrogen atmosphere (flow rate of nitrogen: 250 ml/min). For a reference cell, 5.52 mg of α-alumina was used as a reference substance. Further, the measurement sample was heated to measure the weight thereof as described later. Assuming that the whole decreased weight corresponds to the gasified sample, the amount of gas generated (%) "120°C→350°C" was calculated as described below.

Amount of gas generated (%) "120°C→350°C"=(weight at 350°C-weight at 120°C)/weight at 120°C×100

The amount of gas generated (%) "120°C→320°C" was calculated as described below.

Amount of gas generated (%) "120°C→320°C"=(weight at 320°C-weight at 120°C)/weight at 120°C×100

In this regard, the weight at 350°C means a weight obtained when the temperature of the measurement sample was elevated from 120°C at a rate of 10°C/min to reach 350°C. The weight at 120°C means a weight obtained after the temperature of the measurement sample was elevated from room temperature to 120°C at a rate of 10°C/min and then kept at 120°C for 2 hours. The weight at 320°C means a weight obtained when the temperature of the measurement sample was elevated from 120°C at a rate of 10°C/min to reach 320°C.

<Measurement of glass transition temperature (Tg)>

The measurement was carried out using a differential scanning calorimeter (DSC) (product name "DSC-7000" manufactured by Hitachi High-Tech Science Corporation).

7 to 12 mg of a test piece was precisely weighed in a sample container for Al autosampler (RDC aluminum pan, cylindrical container having a diameter of 6.8 mm and a height of 2.5 mm), and the upper portion of the sample container was sealed using a cover for Al autosampler, thereby preparing a measurement sample.

The measurement was carried out under nitrogen atmosphere (flow rate of nitrogen: 50 ml/min). For a reference cell, 10.0 mg of alumina was used as a reference substance. Further, the temperature of the measurement sample was adjusted to -70°C and then elevated to 200°C at a rate of 10°C/min. After that, cooling was carried out at a rate of 10°C/min to decrease the temperature to -70°C. After that, the temperature was elevated again to 200°C at a rate of 10°C/min, and the measurement was carried out.

<Measurement of YI value>

The measurement was carried out using a spectroscopic colorimeter SE2000 manufactured by Nippon Denshoku Industries Co., Ltd. Specifically, 12 g of a resin sample was dissolved in 60 mL of dichloromethane, and the measurement was carried out using a quartz cell having an optical path length of 6 cm. As a blank, dichloromethane was used.

<Example 1>

As raw materials, a poly-n-propylene glycol Velvetol H500 (Mw: 1700) manufactured by ALLESSA in an amount equivalent to 85% by mass, bisphenol A (hereinafter referred to as BPA) in an amount equivalent to 15% by mass, and diphenyl carbonate (hereinafter referred to as DPC) at a molar ratio relative to diol of 1.16 were put into a polymerization apparatus equipped with a three-necked flask. Further, as a catalyst, an aqueous solution of $Cs_2CO_3$ was added thereto in an amount of 11 μmol (as Cs) per 1 mol of diol.

Drying in the system was carried out for 1 hour, and then the pressure in the polymerization apparatus was recovered using nitrogen. The polymerization was initiated at the point when the polymerization apparatus in which the pressure was recovered was immersed in an oil bath, and the polymerization was carried out according to the temperature elevation/pressure reduction program shown in Table 1. Physical properties of the obtained polycarbonate resin are shown in Table 5. The concentration of OH in the polycarbonate resin obtained in Example 1 was 70 ppm.

Table 1

Table 1

| Time | Set temperature | Set pressure |
|---|---|---|
| (min) | (°C) | (kPaA) |
| 0 | 200 | 97 |
| 10 | 200 → 217 | 97 → 27 |
| 20 | 217 | 27 → 24 |
| 30 | 217 | 24 → 20 |
| 40 | 217 | 20 → 17 |

(continued)

| Time | Set temperature | Set pressure |
|---|---|---|
| (min) | (°C) | (kPaA) |
| 50 | 217 | 17-713 |
| 60 | 217 | 13 → 6 |
| 70 | 217 | 6 → 0.13 or less |
| 80 | 217 | 0.13 or less |
| 140 | Finished | 100 |

<Examples 2 and 3>

The reaction was performed in a manner similar to that in Example 1, except that the raw materials were changed to those shown in Table 5. Physical properties of the obtained polycarbonate resin are shown in Table 5. The concentration of OH in the polycarbonate resin obtained in Example 2 was 240 ppm, and the concentration of OH in the polycarbonate resin obtained in Example 3 was 1100 ppm.

<Example 4>

The reaction was performed in a manner similar to that in Example 1, except that the raw materials were changed to those shown in Table 5 and that the temperature elevation/pressure reduction program was changed to that shown in Table 2. Physical properties of the obtained polycarbonate resin are shown in Table 5.

Table 2

Table 2

| Time | Set temperature | Set pressure |
|---|---|---|
| (min) | (°C) | (kPaA) |
| 0 | 201 | 97 |
| 10 | 201 → 211 | 97 → 27 |
| 70 | 211 → 217 | 27 |
| 90 | 217 → 227 | 27 → 24 |
| 110 | 227 → 232 | 24 -7 20 |
| 130 | 232 → 241 | 20 → 17 |
| 140 | 241 | 17 → 13 |
| 150 | 241 → 260 | 13 → 6 |
| 160 | 260 | 6 → 4 |
| 170 | 260 | 4 → 0.13 or less |
| 230 | 260 | 0.13 or less |
| 320 | Finished | 100 |

<Example 5>

The reaction was performed in a manner similar to that in Example 1, except that the raw materials were changed to those shown in Table 5 and that the temperature elevation/pressure reduction program was changed to that shown in Table 3. Physical properties of the obtained polycarbonate resin are shown in Table 5. The concentration of

OH in the polycarbonate resin obtained in Example 5 was 2200 ppm.

Table 3

Table 3

| Time | Set temperature | Set pressure |
|---|---|---|
| (min) | (°C) | (kPaA) |
| 0 | 200 | 99 |
| 10 | 200 | 99 → 27 |
| 40 | 200 → 211 | 27 |
| 70 | 211 | 27 → 24 |
| 90 | 211 → 217 | 24 |
| 110 | 217 | 24 → 20 |
| 130 | 217 → 227 | 20 |
| 150 | 227 | 20 → 17 |
| 170 | 222 → 232 | 17 |
| 180 | 232 | 17 → 13 |
| 200 | 232 | 13 → 6 |
| 220 | 232 | 6 → 0.13 or less |
| 230 | 232 | 0.13 or less |
| 290 | Finished | 100 |

<Examples 6 and 7>

The reaction was performed in a manner similar to that in Example 1, except that the raw materials were changed to those shown in Table 5 and that the temperature elevation/pressure reduction program was changed to that shown in Table 4. Physical properties of the obtained polycarbonate resin are shown in Table 5.

Table 4

Table 4

| Time | Set temperature | Set pressure |
|---|---|---|
| (min) | (°C) | (kPaA) |
| 0 | 200 | 97 |
| 10 | 200 → 217 | 97 → 27 |
| 25 | 217 | 27 → 24 |
| 40 | 217 | 24 -7 20 |
| 55 | 217 | 20 -7 17 |
| 70 | 217 | 17 → 13 |
| 85 | 217 | 13 → 6 |
| 100 | 217 | 6 → 0.13 or less |

(continued)

| Time | Set temperature | Set pressure |
|---|---|---|
| (min) | (°C) | (kPaA) |
| 110 | 217 | 0.13 or less |
| 170 | Finished | 100 |

<Comparative Example>

The reaction was performed in a manner similar to that in Example 4, except that the raw materials were changed to those shown in Table 5. Physical properties of the obtained polycarbonate resin are shown in Table 5. The concentration of OH in the polycarbonate resin obtained in Comparative Example was 850 ppm.

Table 5

Table 5

| | | | | Example 1 | Example 2 | Example 3 | Example 4 | Example 5 | Example 6 | Example 7 | Comparative Example |
|---|---|---|---|---|---|---|---|---|---|---|---|
| Raw materials | Mass ratio of diol | 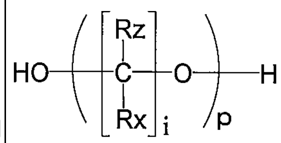 | Rz=H, Rx=H i=3, p=9 | manufactured by ALLESSA poly-n-propylene glycol Velvetol H500 | 85 | 85 | 0 | 0 | 0 | 100 | 0 | 0 |
| | | | Rz=H, Rx=H i=4, p=9 | manufactured by Mitsubishi Chemical Corporation polytetramethylene glycol PTMG 650 | 0 | 0 | 85 | 0 | 0 | 0 | 100 | 0 |
| | | | Rz=H, Rx=H i=4, p=9 | manufactured by BASF polytetramethylene glycol PTMG 650 | 0 | 0 | 0 | 7 | 0 | 0 | 0 | 0 |
| | | | Rz=H, Rx=H i=4, p=21 | manufactured by Mitsubishi Chemical Corporation polytetramethylene glycol PTMG 1500 | 0 | 0 | 0 | 0 | 85 | 0 | 0 | 0 |
| | | manufactured by Mitsubishi Chemical Corporation bisphenol A | | | 15 | 15 | 15 | 93 | 15 | 0 | 0 | 100 |
| | Amount of Cs ner 1 mol of diol (unit: μmol/diol) | | | | 11 | 10 | 10 | 1 | 10 | 10 | 10 | 10 |
| | Molar ratio of diphenyl carbonate (DPC) relative to diol | | | | 1.16 | 1.07 | 1.10 | 1.12 | 1.07 | 1.07 | 1.07 | 1.07 |
| Physical properties | Polystyrene-equivalent molecular weight (Mw) | | | | 15000 | 38000 | 26000 | 28000 | 25000 | 32000 | 14000 | 38000 |
| | Glass transition temperature Tg (°C) | | | | <35 | <35 | <35 | 105 | <35 | <35 | <35 | 148 |

<Example 8>

The reaction was performed in a manner similar to that in Example 1, except that the raw materials were changed to those shown in Table 16 and that the temperature elevation/pressure reduction program was changed to that shown in Table 6. Physical properties of the obtained polycarbonate resin are shown in Table 17.

Table 6

Table 6

| Time | Set temperature | Set pressure |
|---|---|---|
| (min) | (°C) | (kPaA) |
| 0 | 200 | 97 |
| 10 | 200 → 217 | 97 27 |
| 20 | 217 | 27 → 24 |
| 30 | 217 | 24 → 20 |
| 40 | 217 | 20 → 17 |
| 50 | 217 | 17 → 13 |
| 60 | 217 | 13 → 6 |
| 70 | 217 | 6 → 0.13 or less |
| 80 | 217 | 0.13 or less |
| 140 | Finished (217°C) | 100 |

<Example 9>

The reaction was performed in a manner similar to that in Example 1, except that the raw materials were changed to those shown in Table 16 and that the temperature elevation/pressure reduction program was changed to that shown in Table 7. Physical properties of the obtained polycarbonate resin are shown in Table 17.

Table 7

Table 7

| Time | Set temperature | Set pressure |
|---|---|---|
| (min) | (°C) | (kPaA) |
| 0 | 200 | 97 |
| 10 | 200 → 217 | 97 → 27 |
| 80 | 217 | 27 → 24 |
| 170 | 217 | 24 → 20 |
| 210 | 217 | 20 → 17 |
| 230 | 217 | 17 → 13 |
| 260 | 217 | 13 → 6 |
| 280 | 217 | 6 → 0.13 or less |
| 290 | 217 | 0.13 or less |

(continued)

| Time | Set temperature | Set pressure |
|---|---|---|
| (min) | (°C) | (kPaA) |
| 350 | Finished (217°C) | 100 |

<Example 10>

The reaction was performed in a manner similar to that in Example 1, except that the raw materials were changed to those shown in Table 16 and that the temperature elevation/pressure reduction program was changed to that shown in Table 8. Physical properties of the obtained polycarbonate resin are shown in Table 17.

Table 8

Table 8

| Time | Set temperature | Set pressure |
|---|---|---|
| (min) | (°C) | (kPaA) |
| 0 | 200 | 97 |
| 30 | 200 | 97 -> 27 |
| 70 | 200 → 217 | 27 |
| 90 | 217 | 27 → 24 |
| 110 | 217 | 24 → 20 |
| 130 | 217 | 20 → 17 |
| 140 | 217 → 227 | 17 |
| 150 | 227 | 17 → 13 |
| 160 | 227 | 13-76 |
| 170 | 227 | 6 → 0.13 or less |
| 180 | 227 | 0.13 or less |
| 240 | Finished (227°C) | 100 |

<Example 11>

The reaction was performed in a manner similar to that in Example 1, except that the raw materials were changed to those shown in Table 16 and that the temperature elevation/pressure reduction program was changed to that shown in Table 9. Physical properties of the obtained polycarbonate resin are shown in Table 17.

Table 9

Table 9

| Time | Set temperature | Set pressure |
|---|---|---|
| (min) | (°C) | (kPaA) |
| 0 | 120 | 97 |
| 10 | 120 → 150 | 97 |

(continued)

| Time | Set temperature | Set pressure |
|---|---|---|
| (min) | (°C) | (kPaA) |
| 20 | 150 → 180 | 97 |
| 30 | 180 → 200 | 27 |
| 50 | 200 → 217 | 97 → 27 |
| 65 | 217 | 27 → 24 |
| 80 | 217 | 24 → 20 |
| 95 | 217 | 20 → 17 |
| 110 | 217 | 17-713 |
| 125 | 217 | 13-76 |
| 140 | 217 | 6 → 0.13 or less |
| 150 | 217 | 0.13 or less |
| 210 | Finished (217°C) | 0.13 or less |

<Example 12>

The reaction was performed in a manner similar to that in Example 1, except that the raw materials were changed to those shown in Table 16 and that the temperature elevation/pressure reduction program was changed to that shown in Table 10. Physical properties of the obtained polycarbonate resin are shown in Table 17.

Table 10

Table 10

| Time | Set temperature | Set pressure |
|---|---|---|
| (min) | (°C) | (kPaA) |
| 0 | 200 | 97 |
| 10 | 200 | 97 → 27 |
| 40 | 200 → 217 | 27 |
| 60 | 217 | 27 → 24 |
| 80 | 217 | 24 → 20 |
| 110 | 217 | 20 → 17 |
| 120 | 217 → 227 | 17 → 13 |
| 130 | 227 | 17 → 13 |
| 140 | 227 | 13-76 |
| 150 | 227 | 6 -> 0.13 or less |
| 160 | 227 | 0.13 or less |
| 220 | Finished (227°C) | 100 |

<Example 13>

The reaction was performed in a manner similar to that in Example 1, except that the raw materials were

changed to those shown in Table 16 and that the temperature elevation/pressure reduction program was changed to that shown in Table 11. Physical properties of the obtained polycarbonate resin are shown in Table 17.

Table 11

Table 11

| Time | Set temperature | Set pressure |
|---|---|---|
| (min) | (°C) | (kPaA) |
| 0 | 200 | 97 |
| 10 | 200 | 97 → 27 |
| 30 | 200 → 211 | 27 |
| 70 | 211 | 27 → 24 |
| 80 | 211 --> 217 | 24 |
| 100 | 217 | 24 → 20 |
| 110 | 217 → 227 | 20 |
| 130 | 227 | 20 → 17 |
| 140 | 227 → 237 | 17 |
| 150 | 237 | 17 → 13 |
| 170 | 237 | 13 → 6 |
| 190 | 237 | 6 → 0.13 or less |
| 200 | 237 | 0.13 or less |
| 260 | 237 | 100 |

<Examples 14 and 15>

The reaction was performed in a manner similar to that in Example 1, except that the raw materials were changed to those shown in Table 16 and that the temperature elevation/pressure reduction program was changed to that shown in Table 12. Physical properties of the obtained polycarbonate resin are shown in Table 17.

Table 12

Table 12

| Time | Set temperature | Set pressure |
|---|---|---|
| (min) | (OC) | (kPaA) |
| 0 | 200 | 97 |
| 10 | 200 → 217 | 97 → 27 |
| 25 | 217 | 27 → 24 |
| 40 | 217 | 24 → 20 |
| 55 | 217 | 20 → 17 |
| 70 | 217 | 17 → 13 |
| 85 | 217 | 13 → 6 |
| 100 | 217 | 6 -> 0.13 or less |

(continued)

| Time | Set temperature | Set pressure |
|---|---|---|
| (min) | (OC) | (kPaA) |
| 110 | 217 | 0.13 or less |
| 170 | Finished (217°C) | 100 |

<Example 16>

The reaction was performed in a manner similar to that in Example 1, except that the raw materials were changed to those shown in Table 16 and that the temperature elevation/pressure reduction program was changed to that shown in Table 13. Physical properties of the obtained polycarbonate resin are shown in Table 17.

Table 13

Table 13

| Time | Set temperature | Set pressure |
|---|---|---|
| (min) | (°C) | (kPaA) |
| 0 | 200 | 97 |
| 10 | 200 → 217 | 97 → 27 |
| 100 | 217 | 27 → 24 |
| 130 | 217 → 227 | 24 |
| 170 | 227 | 24 → 20 |
| 190 | 227 | 20 → 17 |
| 210 | 227 | 17 → 13 |
| 230 | 227 | 13 → 6 |
| 250 | 227 → 232 | 6 |
| 270 | 232 | 6 → 0.13 or less |
| 280 | 232 | 0.13 or less |
| 340 | Finished (232°C) | 100 |

<Example 17>

The reaction was performed in a manner similar to that in Example 1, except that the raw materials were changed to those shown in Table 16 and that the temperature elevation/pressure reduction program was changed to that shown in Table 14. Physical properties of the obtained polycarbonate resin are shown in Table 17.

Table 14

Table 14

| Time | Set temperature | Set pressure |
|---|---|---|
| (min) | (°C) | (kPaA) |
| 0 | 200 | 97 |

(continued)

| Time | Set temperature | Set pressure |
|---|---|---|
| (min) | (°C) | (kPaA) |
| 10 | 200 → 217 | 97 → 27 |
| 40 | 217 | 27 → 24 |
| 60 | 217 | 24 → 20 |
| 80 | 217 | 20 -> 17 |
| 90 | 217 | 17-713 |
| 110 | 217 | 13 → 6 |
| 130 | 217 | 6 → 0.13 or less |
| 140 | 217 | 0.13 or less |
| 200 | Finished (217°C) | 100 |

<Example 18>

The reaction was performed in a manner similar to that in Example 1, except that the raw materials were changed to those shown in Table 16 and that the temperature elevation/pressure reduction program was changed to that shown in Table 15. Physical properties of the obtained polycarbonate resin are shown in Table 17.

Table 15

Table 15

| Time | Set temperature | Set pressure |
|---|---|---|
| (min) | (°C) | (kPaA) |
| 0 | 200 | 97 |
| 10 | 200 → 217 | 97 → 27 |
| 70 | 217 → 222 | 27 |
| 90 | 217 | 27 → 24 |
| 120 | 217 | 24 → 20 |
| 150 | 222 → 227 | 20 |
| 160 | 227 | 20 17 |
| 180 | 227 | 17 → 13 |
| 200 | 227 | 13 → 6 |
| 220 | 227 | 6 → 0.13 or less |
| 230 | 227 | 0.13 or less |
| 290 | Finished (227°C) | 100 |

Table 16

Table 16

| | | | | | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|---|
| Raw materials | Mass ratio of diol | 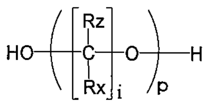 | Rz=H, Rx=H i=3, p=9 | manufactured by ALLESSA poly-n-propylene glycol Velvetol H500 | 0 | 85 | 0 | o | 0 | 0 | 0 | o | 85 | 85 | 85 |
| | | | Rz=H, Rx=H i=4, p=9 | manufactured by Mitsubishi Chemical Corporation polytetramethylene glycol PTMG 650 | 85 | 0 | 85 | 85 | 85 | 85 | 85 | 85 | 0 | 0 | 0 |
| | | | Rz=H, Rx=H i=4, p=9 | manufactured by BASF polytetramethylene glycol PTMG 650 | 0 | 0 | 0 | 0 | 0 | 0 | 0 | 0 | 0 | 0 | 0 |
| | | | Rz=H, Rx=H i=4, p=21 | manufactured by Mitsubishi Chemical Corporation polytetramethylene glycol PTMG 1500 | 0 | 0 | 0 | 0 | 0 | 0 | 0 | 0 | 0 | 0 | 0 |
| | | manufactured by Mitsubishi Chemical Corporation bisphenol A | | | 15 | 15 | 0 | 0 | 0 | 0 | 0 | 0 | 0 | 0 | 0 |
| | | manufactured by Tokyo Chemical Industry Co., Ltd. bisphenol S | | | | | 15 | 0 | 0 | 0 | 0 | 0 | 15 | 0 | 0 |
| | | manufactured by Tokyo Chemical Industry Co., Ltd. 4,4'-oxydiphenol | | | | | 0 | 15 | 0 | 0 | 0 | 0 | 0 | 0 | 0 |

(continued)

| | | | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|
| | | manufactured by Tokyo Chemical Industry Co., Ltd. 4,4'-biphenol | | | 0 | 0 | 15 | 15 | 15 | 0 | 0 | 15 | 0 |
| | | manufactured by Tokyo Chemical Industry Co., Ltd. 4,4'-thiodiphenol | | | 0 | 0 | 0 | 0 | 0 | 15 | 0 | 0 | 15 |
| | Amount of Cs per 1 mol of diol (unit: μmol/diol) | | 10 | 5 | 10 | 10 | 10 | 10 | 10 | 10 | 5 | 5 | 5 |
| | Molar ratio of diphenyl carbonate (DPC) relative to diol | | 1.15 | 1.10 | 1.07 | 1.07 | 1.07 | 1.07 | 1.07 | 1.07 | 1.07 | 1.1 | 1.1 |

Table 17

Table 17

| | | | | | | | | Amount of gas generated (%) | | |
|---|---|---|---|---|---|---|---|---|---|---|
| | | | | | GPC (PSt-equivalent) | | | 120°C → 350°C | 120°C → 320°C | YI of solution |
| | Diol monomer/% bv mass | | | | Mw | Mn | Mw/Mn | | | |
| Example 8 | BPA | 15 | PTMG | 85 | 22800 | 10200 | 2.24 | 9.8 | 4.1 | 0.61 |
| Example 9 | BPA | 15 | P3MG | 85 | 22800 | 9680 | 2.35 | 8.1 | 1.8 | 3.31 |
| Example 10 | BPS | 15 | PTMG | 85 | 21100 | 9060 | 2.33 | 2.9 | 1.0 | 2.28 |
| Example 11 | BPO | 15 | PTMG | 85 | 17600 | 7380 | 2.38 | 9.0 | 3.6 | 2.51 |
| Example 12 | BF | 15 | PTMG | 85 | 14100 | 5390 | 2.62 | 6.5 | 2.7 | 2.27 |
| Example 13 | BF | 15 | PTMG | 85 | 10800 | 3880 | 2.78 | 6.0 | 2.0 | 1.82 |
| Example 14 | BF | 15 | PTMG | 85 | 22100 | 8450 | 2.62 | 7.7 | 3.5 | 0.97 |
| Example 15 | TDP | 15 | PTMG | 85 | 23200 | 9350 | 2.49 | 11.0 | 4.0 | 2.14 |
| Example 16 | BPS | 15 | P3MG | 85 | 21200 | 6300 | 3.37 | 7.6 | 2.4 | 16.98 |
| Example 17 | BF | 15 | P3MG | 85 | 22600 | 9770 | 2.31 | 7.8 | 1.8 | 9.76 |
| Example 18 | TDP | 15 | P3MG | 85 | 23500 | 9920 | 2.37 | 12.7 | 2.1 | 8.26 |
| BPA: bisphenol A<br>BPS: bisphenol S<br>BPO: 4,4'-oxydiphenol<br>BF: 4,4'-biphenol<br>TDP: 4,4'-thiodiphenol<br>PTMG: polytetramethylene ether glycol<br>P3MG: poly-n-propylene glycol | | | | | | | | | | |

INDUSTRIAL APPLICABILITY

When using the polycarbonate resin of the present invention, the amount of gas generated is very small, and therefore it can be suitably utilized for various molded products.

In general, a polycarbonate resin has a high Tg, and for this reason, at the time of melt molding, it is required to be heated to a high temperature (180°C or higher) and melted. For reduction of the cost for molding, molding at lower temperatures has been desired. Further, as a material for various industrial products, a polycarbonate having a low Tg has been desired. For example, though Tg of a widely-known bisphenol A-type polycarbonate resin is generally about 150°C, a material having a Tg lower than that has been desired. In the present invention, the copolymerized polycarbonate of polytetramethylene glycol and bisphenol A, and in particular, the copolymerized polycarbonate of poly-n-propylene

glycol and bisphenol A have a low Tg and can be widely and usefully used as materials for industrial products.

## Claims

1. A polycarbonate resin comprising a structural unit (A) represented by general formula (1) and a structural unit (B) represented by general formula (4),

wherein said monomer constituting the structural unit (B) is poly-n-propylene glycol or polytetramethylene ether glycol, and
wherein the polystyrene-equivalent weight average molecular weight (Mw) of the polycarbonate resin is 5,000 to 40,000, wherein the polystyrene-equivalent weight average molecular weight is measured as specified in the description:

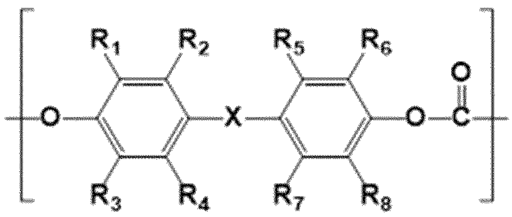

(1)

wherein in general formula (1):

$R_1$, $R_2$, $R_3$, $R_4$, $R_5$, $R_6$, $R_7$ and $R_8$ are each independently selected from the group consisting of a hydrogen atom, a fluorine atom, a chlorine atom, a bromine atom, an iodine atom, an alkyl group having 1 to 7 carbon atoms, an aryl group having 6 to 12 carbon atoms, an alkenyl group having 2 to 7 carbon atoms, an alkoxy group having 1 to 7 carbon atoms and an aralkyl group having 7 to 17 carbon atoms, and each of the alkyl group, the aryl group, the alkenyl group, the alkoxy group and the aralkyl group may have a substituent; and
X represents -O-, -S-, -SO-, $-SO_2-$, -CO-, a cycloalkylene group having 6 to 12 carbon atoms, or a divalent group represented by general formula (2) or general formula (3), and the cycloalkylene group may be substituted with 1 to 12 alkyl groups having 1 to 3 carbon atoms:

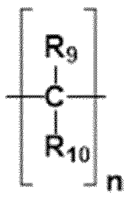

(2)

wherein in general formula (2):

$R_9$ and $R_{10}$ are each independently selected from the group consisting of a hydrogen atom, a fluorine atom, a chlorine atom, a bromine atom, an iodine atom, an alkyl group having 1 to 20 carbon atoms, an alkoxy group having 1 to 5 carbon atoms, an aryl group having 6 to 12 carbon atoms, an aralkyl group having 7 to 17 carbon atoms and an alkenyl group having 2 to 15 carbon atoms;
each of the alkyl group, the alkoxy group, the aryl group, the aralkyl group and the alkenyl group of $R_9$ and $R_{10}$ may have a substituent;
$R_9$ and $R_{10}$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent; and
n represents an integer of 0 to 20,

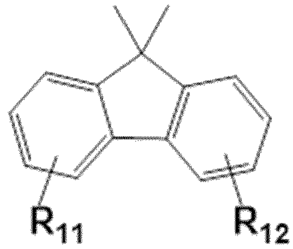

(3)

wherein in general formula (3):

$R_{11}$ and $R_{12}$ are each independently selected from the group consisting of a hydrogen atom, a fluorine atom, a chlorine atom, a bromine atom, an iodine atom, an alkyl group having 1 to 20 carbon atoms, an alkoxy group having 1 to 7 carbon atoms, an aryl group having 6 to 12 carbon atoms, an aralkyl group having 7 to 17 carbon atoms and an alkenyl group having 2 to 15 carbon atoms, and each of the alkyl group, the alkoxy group, the aryl group, the aralkyl group and the alkenyl group may have a substituent; and

$R_{11}$ and $R_{12}$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent,

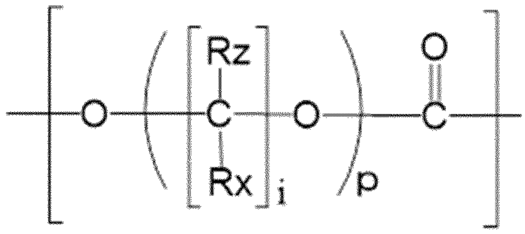

(4)

wherein in general formula (4): $R_z$ and $R_x$ each independently represent a hydrogen atom or an alkyl group having 1 to 3 carbon atoms; i represents an integer of 3 or 4; and p represents an integer of 5 to 600.

**2.** The polycarbonate resin according to claim 1, wherein the mass ratio between the structural unit (A) and the structural unit (B) (A/B) is 1/99 to 50/50.

**3.** A polycarbonate resin comprising only a structural unit (B) represented by general formula (4),

wherein said monomer constituting the structural unit (B) is poly-n-propylene glycol or polytetramethylene ether glycol, and

wherein the polystyrene-equivalent weight average molecular weight (Mw) of the polycarbonate resin is 5,000 to 40,000, wherein the polystyrene-equivalent weight average molecular weight is measured as specified in the description:

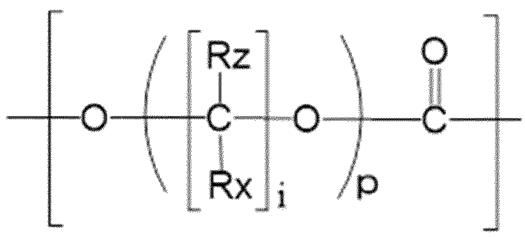

(4)

wherein: $R_z$ and $R_x$ each independently represent a hydrogen atom or an alkyl group having 1 to 3 carbon atoms; i represents an integer of 3 or 4; and p represents an integer of 5 to 600.

**4.** The polycarbonate resin according to any one of claims 1 to 3, wherein the concentration of a terminal hydroxyl group in the polycarbonate resin is 1 ppm to 3000 ppm, wherein the concentration of a terminal hydroxyl group is measured as specified in the description.

**5.** The polycarbonate resin according to any one of claims 1 to 4, wherein the glass transition temperature (Tg) of the polycarbonate resin is -100 to 140°C, wherein the glass transition temperature is measured as specified in the description.

**Patentansprüche**

**1.** Polycarbonatharz, umfassend eine durch die allgemeine Formel (1) dargestellte Struktureinheit (A) und eine durch die allgemeine Formel (4) dargestellte Struktureinheit (B),

wobei das Monomer, das die Struktureinheit (B) bildet, Poly-n-propylenglykol oder Polytetramethylenetherglykol ist und

wobei das Polystyrol-äquivalente gewichtsmittlere Molekulargewicht (Mw) des Polycarbonatharzes 5.000 bis 40.000 beträgt, wobei das Polystyrol-äquivalente gewichtsmittlere Molekulargewicht wie in der Beschreibung festgelegt gemessen wird:

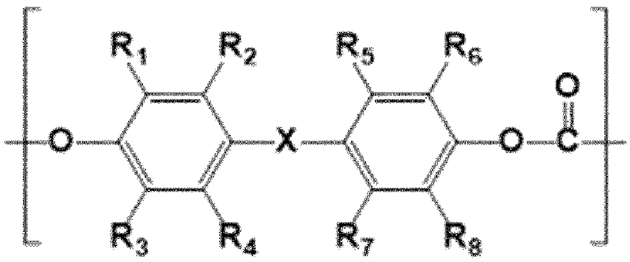
(1)

wobei in der allgemeinen Formel (1)

$R_1$, $R_2$, $R_3$, $R_4$, $R_5$, $R_6$, $R_7$ und $R_8$ jeweils unabhängig aus der Gruppe, bestehend aus einem Wasserstoffatom, einem Fluoratom, einem Chloratom, einem Bromatom, einem Iodatom, einer Alkylgruppe mit 1 bis 7 Kohlenstoffatomen, einer Arylgruppe mit 6 bis 12 Kohlenstoffatomen, einer Alkenylgruppe mit 2 bis 7 Kohlenstoffatomen, einer Alkoxygruppe mit 1 bis 7 Kohlenstoffatomen und einer Aralkylgruppe mit 7 bis 17 Kohlenstoffatomen, ausgewählt sind und jede von der Alkylgruppe, der Arylgruppe, der Alkenylgruppe, der Alkoxygruppe und der Aralkylgruppe einen Substituenten aufweisen kann und

X -O-, -S-, -SO-, $-SO_2-$, -CO-, eine Cycloalkylengruppe mit 6 bis 12 Kohlenstoffatomen oder eine durch die allgemeine Formel (2) oder allgemeine Formel (3) dargestellte zweiwertige Gruppe darstellt und die Cycloalkylengruppe mit 1 bis 12 Alkylgruppen mit 1 bis 3 Kohlenstoffatomen substituiert sein kann:

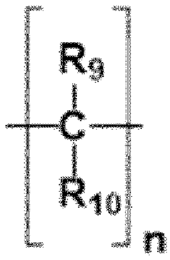
(2)

wobei in der allgemeinen Formel (2)

$R_9$ und $R_{10}$ jeweils unabhängig aus der Gruppe, bestehend aus einem Wasserstoffatom, einem Fluoratom, einem Chloratom, einem Bromatom, einem Iodatom, einer Alkylgruppe mit 1 bis 20 Kohlenstoffatomen, einer Alkoxygruppe mit 1 bis 5 Kohlenstoffatomen, einer Arylgruppe mit 6 bis 12 Kohlenstoffatomen, einer Aralkylgruppe mit 7 bis 17 Kohlenstoffatomen und einer Alkenylgruppe mit 2 bis 15 Kohlenstoffatomen, ausgewählt sind, jede von der Alkylgruppe, der Alkoxygruppe, der Arylgruppe, der Aralkylgruppe und der Alkenylgruppe von $R_9$ und $R_{10}$ einen Substituenten aufweisen kann,

$R_9$ und $R_{10}$ so aneinander gebunden sein können, dass sie einen carbocyclischen Ring mit 3 bis 20 Kohlenstoffatomen oder einen heterocyclischen Ring mit 1 bis 20 Kohlenstoffatomen bilden, und jeder von dem carbocyclischen Ring und dem heterocyclischen Ring einen Substituenten aufweisen kann und

n eine ganze Zahl von 0 bis 20 ist,

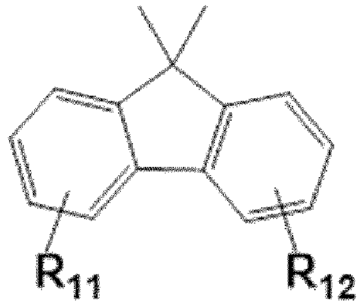

(3)

wobei in der allgemeinen Formel (3)

$R_{11}$ und $R_{12}$ jeweils unabhängig aus der Gruppe, bestehend aus einem Wasserstoffatom, einem Fluoratom, einer Chloratom, einem Bromatom, einem Iodatom, einer Alkylgruppe mit 1 bis 20 Kohlenstoffatomen, einer Alkoxygruppe mit 1 bis 7 Kohlenstoffatomen, einer Arylgruppe mit 6 bis 12 Kohlenstoffatomen, einer Aralkylgruppe mit 7 bis 17 Kohlenstoffatomen und einer Alkenylgruppe mit 2 bis 15 Kohlenstoffatomen, ausgewählt sind und jede von der Alkylgruppe, der Alkoxygruppe, der Arylgruppe, der Aralkylgruppe und der Alkenylgruppe einen Substituenten aufweisen kann und

$R_{11}$ und $R_{12}$ so aneinander gebunden sein können, dass sie einen carbocyclischen Ring mit 3 bis 20 Kohlenstoffatomen oder einen heterocyclischen Ring mit 1 bis 20 Kohlenstoffatomen bilden, und jeder von dem carbocyclischen Ring und dem heterocyclischen Ring einen Substituenten aufweisen kann,

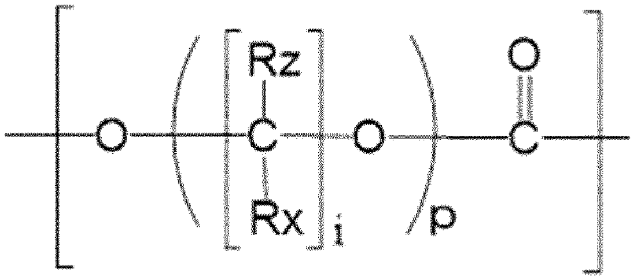

(4)

wobei in der allgemeinen Formel (4) $R_z$ und $R_x$ jeweils unabhängig ein Wasserstoffatom oder eine Alkylgruppe mit 1 bis 3 Kohlenstoffatomen darstellen, i eine ganze Zahl von 3 oder 4 darstellt und p eine ganze Zahl von 5 bis 600 darstellt.

**2.** Polycarbonatharz gemäß Anspruch 1, wobei das Massenverhältnis zwischen der Struktureinheit (A) und der Struktureinheit (B) (A/B) 1/99 bis 50/50 beträgt.

**3.** Polycarbonatharz, umfassend lediglich eine durch die allgemeine Formel (4) dargestellte Struktureinheit (B),

wobei das Monomer, das die Struktureinheit (B) bildet, Poly-n-propylenglykol oder Polytetramethylenetherglykol ist und

wobei das Polystyrol-äquivalente gewichtsmittlere Molekulargewicht (Mw) des Polycarbonatharzes 5.000 bis 40.000 beträgt, wobei das Polystyrol-äquivalente gewichtsmittlere Molekulargewicht wie in der Beschreibung festgelegt gemessen wird:

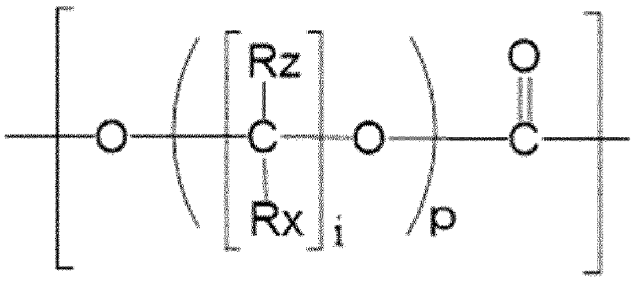

(4)

worin $R_z$ und $R_x$ jeweils unabhängig ein Wasserstoffatom oder eine Alkylgruppe mit 1 bis 3 Kohlenstoffatomen

darstellen, i eine ganze Zahl von 3 oder 4 darstellt und p eine ganze Zahl von 5 bis 600 darstellt.

**4.** Polycarbonatharz gemäß einem der Ansprüche 1 bis 3, wobei die Konzentration einer endständigen Hydroxylgruppe in dem Polycarbonatharz 1 ppm bis 3.000 ppm beträgt, wobei die Konzentration einer endständigen Hydroxylgruppe wie in der Beschreibung festgelegt gemessen wird.

**5.** Polycarbonatharz gemäß einem der Ansprüche 1 bis 4, wobei die Glasübergangstemperatur (Tg) des Polycarbonatharzes -100 bis 140°C beträgt, wobei die Glasübergangstemperatur wie in der Beschreibung festgelegt gemessen wird.

## Revendications

**1.** Résine de polycarbonate comprenant une unité structurale (A) représentée par la formule générale (1) et une unité structurale (B) représentée par la formule générale (4),

dans laquelle ledit monomère constituant l'unité structurale (B) est du poly-n-propylène glycol ou du polytétraméthylène éther glycol, et
dans laquelle le poids moléculaire moyen en poids (Mw) équivalent au polystyrène de la résine de polycarbonate est de 5 000 à 40 000, dans laquelle le poids moléculaire moyen en poids équivalent au polystyrène est mesuré de la façon spécifiée dans la description :

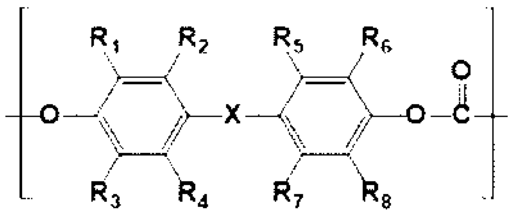
(1)

dans laquelle dans la formule générale (1) :

$R_1$, $R_2$, $R_3$, $R_4$, $R_5$, $R_6$, $R_7$ et $R_8$ sont chacun indépendamment sélectionnés dans le groupe consistant en un atome d'hydrogène, un atome de fluor, un atome de chlore, un atome de brome, un atome d'iode, un groupe alkyle présentant 1 à 7 atomes de carbone, un groupe aryle présentant 6 à 12 atomes de carbone, un groupe alcényle présentant 2 à 7 atomes de carbone, un groupe alcoxy présentant 1 à 7 atomes de carbone et un groupe aralkyle présentant 7 à 17 atomes de carbone, et chacun parmi le groupe alkyle, le groupe aryle, le groupe alcényle, le groupe alcoxy et le groupe aralkyle peut présenter un substituant ; et
X représente -O-, -S-, -SO-, $-SO_2-$, -CO-, un groupe cycloalkylène présentant 6 à 12 atomes de carbone, ou un groupe divalent représenté par la formule générale (2) ou la formule générale (3), et le groupe cycloalkylène peut être substitué par 1 à 12 groupes alkyles présentant 1 à 3 atomes de carbone :

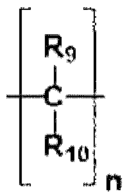
(2)

dans laquelle dans la formule générale (2) :

$R_9$ et $R_{10}$ sont chacun indépendamment sélectionnés dans le groupe consistant en un atome d'hydrogène, un atome de fluor, un atome de chlore, un atome de brome, un atome d'iode, un groupe alkyle présentant 1 à 20 atomes de carbone, un groupe alcoxy présentant 1 à 5 atomes de carbone, un groupe aryle présentant 6 à 12 atomes de carbone, un groupe aralkyle présentant 7 à 17 atomes de carbone et un groupe alcényle présentant 2 à 15 atomes de carbone ;
chacun parmi le groupe alkyle, le groupe alcoxy, le groupe aryle, le groupe aralkyle et le groupe alcényle de

$R_9$ et $R_{10}$ peut présenter un substituant ;
$R_9$ et $R_{10}$ peuvent être liés l'un à l'autre de façon à former un noyau carbocyclique présentant 3 à 20 atomes de carbone ou un noyau hétérocyclique présentant 1 à 20 atomes de carbone, et chacun parmi le noyau carbocyclique et le noyau hétérocyclique peut présenter un substituant ; et
n représente un nombre entier de 0 à 20,

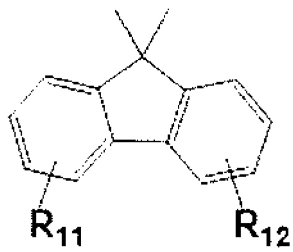 (3)

dans laquelle dans la formule générale (3) :

$R_{11}$ et $R_{12}$ sont chacun indépendamment sélectionnés dans le groupe consistant en un atome d'hydrogène, un atome de fluor, un atome de chlore, un atome de brome, un atome d'iode, un groupe alkyle présentant 1 à 20 atomes de carbone, un groupe alcoxy présentant 1 à 7 atomes de carbone, un groupe aryle présentant 6 à 12 atomes de carbone, un groupe aralkyle présentant 7 à 17 atomes de carbone et un groupe alcényle présentant 2 à 15 atomes de carbone, et parmi chacun le groupe alkyle, le groupe alcoxy, le groupe aryle, le groupe aralkyle et le groupe alcényle peut présenter un substituant ; et
$R_{11}$ ET $R_{12}$ peuvent être liés l'un à l'autre de façon à former un noyau carbocyclique présentant 3 à 20 atomes de carbone ou un noyau hétérocyclique présentant 1 à 20 atomes de carbone, et chacun parmi le noyau carbocyclique et le noyau hétérocyclique peut présenter un substituant,

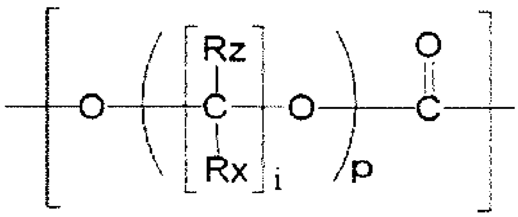 (4)

dans laquelle dans la formule générale (4) : $R_z$ et $R_x$ représentent chacun indépendamment un atome d'hydrogène ou un groupe alkyle présentant 1 à 3 atomes de carbone ; i représente un nombre entier de 3 ou 4 ; et p représente un nombre entier de 5 à 600.

2. Résine de polycarbonate selon la revendication 1, dans laquelle le rapport en masse entre l'unité structurale (A) et l'unité structurale (B) (A/B) est de 1/99 à 50/50.

3. Résine de polycarbonate comprenant seulement une unité structurale (B) représentée par la formule générale (4),

dans laquelle ledit monomère constituant l'unité structurale (B) est du poly-n-propylène glycol ou du polytétraméthylène éther glycol, et
dans laquelle le poids moléculaire moyen en poids (Mw) équivalent au polystyrène de la résine de polycarbonate est de 5 000 à 40 000, dans laquelle le poids moléculaire moyen en poids équivalent au polystyrène est mesuré tel que spécifié dans la description :

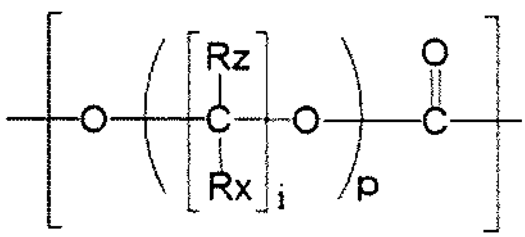 (4)

dans laquelle : $R_z$ et $R_x$ représentent chacun indépendamment un atome d'hydrogène ou un groupe alkyle présentant 1 à 3 atomes de carbone ; i représente un nombre entier de 3 ou 4 ; et p représente un nombre entier de 5 à 600.

**4.** Résine de polycarbonate selon l'une quelconque des revendications 1 à 3, dans laquelle la concentration d'un groupe hydroxyle terminal dans la résine de polycarbonate est de 1 ppm à 3 000 ppm, dans laquelle la concentration d'un groupe hydroxyle terminal est mesurée tel que spécifié dans la description.

**5.** Résine de polycarbonate selon l'une quelconque des revendications 1 à 4, dans laquelle la température de transition vitreuse (Tg) de la résine de polycarbonate est de -100 à 140 °C, dans laquelle la température de transition vitreuse est mesurée tel que spécifié dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0122959 A
- JP H09227785 A
- JP 5699188 B
- JP 2006016497 A
- US 4252922 A